# EUROPÄISCHE PATENTSCHRIFT

(11) **EP 3 584 225 B1**
(45) Veröffentlichungstag und Bekanntmachung des Hinweises auf die Patenterteilung: **17.06.2020**
(21) Anmeldenummer: 19181047.2
(22) Anmeldetag: 18.06.2019
(51) Int. Cl.: C03B 23/045, C03B 23/11

(54) **VERFAHREN ZUM STEUERN DES DREHANTRIEBS EINER HEISSFORMMASCHINE**
METHOD FOR CONTROLLING THE ROTARY DRIVE OF A THERMOFORMING MACHINE
PROCÉDÉ DE COMMANDE DE L'ENTRAÎNEMENT ROTATIF D'UNE MACHINE DE MOULAGE À CHAUD

(30) Priorität: 19.06.2018 DE 102018114724
(43) Veröffentlichungstag der Anmeldung: 25.12.2019
(73) Patentinhaber: SCHOTT Schweiz AG, 9001 St. Gallen (CH)
(72) Erfinder: Studerus, Diego, 9323 Steinach (CH)
(74) Vertreter: Patent- und Rechtsanwälte Ullrich & Naumann

(56) Entgegenhaltungen:
- DE-A1-102012 006 659
- DE-B- 1 011 592

## Beschreibung

Die Erfindung betrifft ein Verfahren zum Steuern des Drehantriebs einer Heißformmaschine mit einer Mehrzahl von kreisförmig angeordneten Bearbeitungsstationen und einem darüber angeordneten Drehtisch, in dem zu bearbeitende Glasrohre gehalten und durch eine schrittweise Drehbewegung von einer Bearbeitungsstation zur nächsten bewegt werden, wobei der Drehtisch mittels eines Schrittgetriebes angetrieben wird, durch welches eine Bewegung einer Antriebswelle in eine zyklische Schrittbewegung übersetzt wird, deren Schrittzyklus eine Bewegungsphase und eine daran anschließende Stillstandsphase umfasst. Sie betrifft weiter eine Steuereinheit für einen Drehantrieb einer Heißformmaschine mit einer Mehrzahl von kreisförmig angeordneten Bearbeitungsstationen und einem darüber angeordneten Drehtisch, in dem zu bearbeitende Glasrohre gehalten und durch eine schrittweise Drehbewegung von einer Bearbeitungsstation zur nächsten bewegbar sind, wobei der Drehtisch antriebsseitig mit einem Schrittgetriebe verbunden ist, welches eine Bewegung einer Antriebswelle in eine zyklische Schrittbewegung übersetzt, deren Schrittzyklus eine Bewegungsphase und eine daran anschließende Stillstandsphase umfasst. Sie betrifft überdies eine Antriebseinheit für eine derartige Heißformmaschine, eine Heißformmaschine und ein Verfahren zum Nachrüsten einer Heißformmaschine.

Heißformmaschinen der eingangs genannten Art sind dem Fachmann beispielsweise aus der DE 1 011 592 B bekannt und dienen der automatisierten Bearbeitung von Glas in mehreren, in der Regel kreisförmig angeordneten Bearbeitungsstationen. Sie dienen häufig zur Herstellung von Pharmacontainern wie Glasfläschchen (Vials), Karpulen oder Spritzenkörpern und weisen üblicherweise auf ihrer Oberseite einen Vorladekranz auf, in den kranzförmig jeweils ein Glasrohr von ca. 1,5 m Länge in eine Vorladeposition eingelegt wird. Das Glasrohr fällt dann an einer definierten Stelle z.B. durch Schieben aus der Vorladeposition über eine entsprechende Öffnung durch ein Haltefutter nach unten und wird dann von den Klemmbacken des Haltefutters fixiert, so dass das Glasrohr um eine bestimmte Länge nach unten über das Haltefutter übersteht. Am nach unten überstehenden offenen Ende wird das Glasrohr bestimmten Bearbeitungsvorgängen unterzogen, die an unterschiedlichen Bearbeitungsstationen durchgeführt werden. Hierzu wird die Maschine und mit ihr die Haltefutter um einen bestimmten Winkel von einer Bearbeitungsposition zur nächsten gedreht.

Dieses erfolgt in einer gegebenen Taktgeschwindigkeit in der Regel durch ein Schrittgetriebe, bei dem eine kontinuierliche Drehbewegung einer Antriebswelle in eine intermittierende Drehbewegung umgesetzt wird, in der sich in jedem Schrittzyklus eine Stillstandsphase mit einer Bewegungsphase abwechselt. In der Stillstandsphase steht der Getriebeausgang zwischen den einzelnen Bewegungsschritten jeweils still, bis der nächste Schritt beginnt. Für die Bewegung der Antriebswelle wird in der Regel ein Asynchronmotor in Verbindung mit einem Untersetzungsgetriebe verwendet. Aus der DE 10 2012 006 659 A1 ist es auch bekannt, einen Servomotor zu verwenden. Das Schrittgetriebe selbst kann prinzipiell verschiedenartig, unter anderem durch Rädergetriebe, Räderkoppelgetriebe, Koppelgetriebe oder Kurvengetriebe realisiert sein.

Je nach zu erzeugendem Endprodukt müssen der Heißformmaschine Glasrohre unterschiedlicher Durchmesser zur Bearbeitung übergeben werden. Insbesondere bei Produkten mit hohem Glasrohrdurchmesser, bei welchen eine größere Glasmasse umgeformt werden muss, ist eine höhere Bearbeitungszeit an der jeweiligen Station nötig. Daher muss die Drehzahl oder Winkelgeschwindigkeit der Antriebswelle für solche höheren Glasdurchmesser reduziert werden, damit sich die Stillstandszeit, die zur Bearbeitung genutzt wird, in jedem Schrittzyklus verlängert. Nachteilig ist dabei aber, dass sich die Produktionsfrequenz reduziert, d.h. weniger Produkte pro Minute hergestellt werden können.

Es ist daher Aufgabe der Erfindung, ein Verfahren zum Steuern des Drehantriebs einer Heißformmaschine der eingangs genannten Art, sowie eine Steuereinheit für einen derartigen Drehantrieb, eine Antriebseinheit für eine derartige Heißformmaschine, eine Heißformmaschine und ein Verfahren zum Nachrüsten einer Heißformmaschine anzugeben, welche für Produkte mit unterschiedliche Bearbeitungszeiten jeweils eine optimale Produktfrequenz ermöglichen.

Bezüglich des Verfahrens wird die Aufgabe gelöst, indem die Winkelgeschwindigkeit der Antriebswelle zu einem ersten Zeitpunkt in der Bewegungsphase eines Schrittzyklus einen ersten Wert annimmt, und zu einem zweiten Zeitpunkt in der Stillstandsphase desselben Schrittzyklus einen zweiten, von dem ersten Wert unterschiedlichen, Wert annimmt.

Bezüglich der Steuereinheit wird die Aufgabe gelöst, indem die Steuereinheit dazu ausgebildet ist, die Antriebswelle des Schrittgetriebes mit einer variablen Winkelgeschwindigkeit derart anzusteuern, dass die Winkelgeschwindigkeit der Antriebswelle zu einem ersten Zeitpunkt in der Bewegungsphase eines Schrittzyklus einen ersten Wert annimmt, und zu einem zweiten Zeitpunkt in der Stillstandsphase desselben Schrittzyklus einen zweiten, von dem ersten Wert unterschiedlichen, Wert annimmt.

Die Erfindung geht dabei von der Überlegung aus, dass bei einer produktionsbedingt gegebenen Bearbeitungs-, d.h. Stillstandszeit eine maximale Effizienz der Heißformanlage dadurch erreicht werden kann, dass das Verhältnis zwischen Transfer-, d.h. Bewegungszeit und Bearbeitungszeit minimal gewählt wird. Während die Taktzahl der Maschine durch die Bearbeitungszeit bestimmt wird und diese so kurz wie möglich gehalten wird, um die Glasumformung (Glasmassenbewegung) noch qualitativ hochwertig durchführen zu können, ist die dazugehörige Transferzeit eigentlich unproduktiv, lässt das Produkt zwischen zwei Formschritten abkühlen. Daher sollte zur Erhöhung der Effizienz und Produktfrequenz insbesondere die Transferzeit, d.h. die Bewegungsphase verkürzt werden.

Hierbei ergibt sich jedoch das Problem, dass das Verhältnis zwischen Transferzeit und Stillstandszeit durch die Geometrie des Schrittschaltgetriebes gegeben und daher fix ist. Die Auslegung der Schrittschaltgetriebe erfolgt jeweils auf die geforderte Maximaldrehzahl und basiert u.a. darauf, dass keine zusätzliche Belastung auf seine Bauteile durch Drehzahländerung erfolgt. Ist eine Maschine zum Beispiel auf Takt 40 (40 Schwenkungen pro Minute = Produkte pro Minute) ausgelegt, so dauert ein Zyklus 60/40 Sekunden = 1,5 Sekunden. Die Schwenkzeit wäre dann z.B. bei einem geometriebedingt gegebenen Verhältnis von 1:3 (Bewegungsphase:Stillstandsphase) 0,375 Sekunden und die Bearbeitungszeit 1,125 Sekunden. Kann jetzt die Maschine bei einem anderen Produkt aufgrund des Prozesses nur mit Takt 20 betrieben werden, so wird die Schwenkzeit aufgrund des fixen Verhältnisses 0,75 Sekunden, obwohl mit dem gleichen Getriebe auch in der halben Zeit geschwenkt werden könnte.

Zur Verkürzung der Transferzeit und der damit einhergehenden Veränderung des Verhältnisses zwischen Stillstandsphase und Bewegungsphase wäre ein Austausch des Getriebes bei Wechsel zu einem anderen Produkt zwar möglich, aber technisch aufwändig und daher nicht sinnvoll. Stattdessen wurde erkannt, dass eine Veränderung dieses Verhältnisses in einfacher Weise auch durch eine Veränderung der Ansteuerung geschehen kann, nämlich durch eine veränderliche Winkelgeschwindigkeit oder Drehzahl der Antriebswelle des Schrittgetriebes während eines Zyklus. Konkret sollte die Winkelgeschwindigkeit der Antriebswelle zu einem ersten Zeitpunkt in der Bewegungsphase eines Schrittzyklus einen ersten Wert annehmen, und zu einem zweiten Zeitpunkt in der Stillstandsphase desselben Schrittzyklus einen zweiten, von dem ersten Wert unterschiedlichen, Wert annehmen. Zwischen Stillstands- und Bewegungsphase eines Zyklus wird die Drehzahl der Antriebswelle also verändert.

Vorzugsweise ist der erste Wert für die Winkelgeschwindigkeit, der in der Bewegungsphase erreicht wird, höher als der zweite Wert, der in der Stillstandsphase erreicht wird. Mit anderen Worten: In der Bewegungsphase wird die Geschwindigkeit erhöht und damit die Transferzeit verkürzt, so dass eine reduzierte Zyklusdauer bei gleichbleibender Bearbeitungszeit erreicht wird.

Vorteilhafterweise ist die Winkelgeschwindigkeit während der Bewegungsphase konstant. Das bedeutet, dass die gesamte Geschwindigkeitsänderung während der Stillstandsphase erfolgt, d.h. zu einem Zeitpunkt, in dem das Schrittgetriebe keine Kraft überträgt. Dadurch wird eine Belastung des Getriebes durch eine Winkelbeschleunigung vermieden. Die Geschwindigkeit wird vielmehr zu Beginn der Stillstandsphase reduziert und am Ende der Stillstandsphase wieder angehoben.

In noch weiterer vorteilhafter Ausgestaltung wird dabei aus einer mechanischen Belastbarkeit eine maximale Winkelbeschleunigung des Drehtisches in der Bewegungsphase ermittelt, und die Winkelgeschwindigkeit während der Bewegungsphase so gewählt, dass diese maximale Winkelbeschleunigung im Wesentlichen erreicht und/oder nicht überschritten wird. Mit anderen Worten: Es wird anhand des Gesamtsystems ermittelt, welche maximale Schwenkgeschwindigkeit mechanisch vertretbar ist. Dabei wird diese vorzugsweise anhand des Schrittgetriebes ermittelt, da dieses der limitierende Faktor bezüglich der mechanischen Belastbarkeit ist. In der Bewegungsphase wird die Antriebswelle konstant so angetrieben, dass die mechanisch maximal mögliche Drehzahl für den Schwenkprozess im Wesentlichen erreicht wird, d.h. wenigstens 80, vorzugsweise 90% der maximal möglichen Drehzahl erreicht werden, und vorzugsweise auch nicht überschritten wird, um die genannten Beschädigungen zu vermeiden.

In weiterer vorteilhafter Ausgestaltung ist die Winkelgeschwindigkeit der Antriebswelle auch während einer Zeitspanne innerhalb der Stillstandsphase konstant. Während der Stillstandsphase erfolgt also keine kontinuierliche Änderung der Winkelgeschwindigkeit, d.h. eine Verlangsamung bis zu einem Scheitelpunkt und eine unmittelbar darauf folgende Beschleunigung, sondern die Winkelgeschwindigkeit wird zu Beginn der Stillstandsphase reduziert und dann auf einem konstanten Niveau gehalten. Erst zum Ende der Stillstandsphase wird sie wieder erhöht. Die Zeitspanne der konstanten Winkelgeschwindigkeit liegt somit vorzugsweise symmetrisch mittig in der Stillstandsphase (und ist selbstverständlich kürzer als die Stillstandsphase).

Die genannte Zeitspanne der konstanten Winkelgeschwindigkeit umfasst dabei vorteilhafterweise mehr als 60%, noch vorteilhafter mehr als 80% der Stillstandsphase. Eine besonders lange Zeitspanne konstanter Winkelgeschwindigkeit erleichtert die Steuerung des Prozesses insbesondere hinsichtlich der Berechnung des Zeitverhältnisses zwischen Stillstand und Bewegung und der Ansteuerung, da Zeitspannen der Winkelgeschwindigkeitsänderung minimiert werden.

Weiterhin wird vorteilhafterweise anhand einer mechanischen Belastbarkeit eine maximale Winkelbeschleunigung der Antriebswelle ermittelt wird, und die Veränderung der Winkelgeschwindigkeit während der Stillstandsphase außerhalb der Zeitspanne so gewählt wird, dass diese maximale Winkelbeschleunigung im Wesentlichen erreicht und/oder nicht überschritten wird. Diese mechanische maximale Belastbarkeit ist hierbei durch das Untersetzungsgetriebe gegeben, da der Drehtisch während der Stillstandsphase nicht bewegt wird. Zu Beginn der Stillstandsphase wird daher mit möglichst maximaler (negativer) Beschleunigung, d.h. 80, 90 oder noch mehr Prozent der errechneten Maximalbelastungsbeschleunigung (allerdings nicht darüber) abgebremst, und am Ende der Stillstandszeit ebenso schnell wieder beschleunigt.

Vorzugsweise folgt in dem Verfahren eine Mehrzahl von Schrittzyklen unmittelbar aufeinander, wobei die Winkelgeschwindigkeitsverläufe jedes Schrittzyklus identisch sind. Mit anderen Worten: Der eingestellte Verlauf der Winkelgeschwindigkeitsänderung wird in jedem Schrittzyklus identisch wiederholt.

Bezüglich der Antriebseinheit für eine Heißformmaschine mit einer Mehrzahl von kreisförmig angeordneten Bearbeitungsstationen und einem darüber angeordneten Drehtisch, in dem zu bearbeitende Glasrohre gehalten und durch eine schrittweise Drehbewegung von einer Bearbeitungsstation zur nächsten bewegbar sind, wobei der Drehtisch antriebsseitig mit einem Schrittgetriebe verbunden ist, welches eine Bewegung einer Antriebswelle in eine zyklische Schrittbewegung übersetzt, deren Schrittzyklus eine Bewegungsphase und eine daran anschließende Stillstandsphase umfasst, umfassend einen Antriebsmotor, ausgebildet zum Antreiben der Antriebswelle mit einer variablen, vorgebbaren Winkelgeschwindigkeit, wird die Aufgabe gelöst, indem die Antriebseinheit weiterhin eine oben beschriebene Steuereinheit umfasst.

In einer derartigen Antriebseinheit ist der Antriebsmotor vorzugsweise als Synchronmotor ausgebildet. Im Gegensatz zu den bisher verwendeten Asynchronmotoren ist durch einen Synchronmotor die oben beschriebene gezielte Beeinflussung der Winkelgeschwindigkeit der Antriebswelle besonders einfach möglich, da beim Synchronmotor gegenüber dem Asynchronmotor eine starre Kopplung der Drehzahl an die Betriebsfrequenz vorliegt. Mittels eines Umrichters mit entsprechender Ansteuerung ist die beschriebene Variation der Winkelgeschwindigkeit besonders einfach Steuer- und realisierbar.

Weiterhin ist in einer derartigen Antriebseinheit das Schrittgetriebe vorzugsweise als Zylinderkurvengetriebe ausgebildet. Ein solches Zylinderkurvengetriebe, auch als Globoid-Rundtischgetriebe bezeichnet, umfasst einen sich kontinuierlich drehenden Zylinder, in den eine Nutkurve eingebracht ist. Ein mit dem Drehtisch verbundener Abnehmer greift in die Nutkurve ein, so dass die Schrittbewegung übertragen wird. Die Stillstandszeit entspricht einem geraden Verlauf der Nutkurve auf dem Zylinder. Wie oben beschrieben kann in dieser Phase die Geschwindigkeit besonders einfach geändert werden, da keine axiale Kraft auf dem Zylindermantel wirkt. Ein Zylinderkurvengetriebe eignet sich daher besonders für die beschriebene Anwendung.

Bezüglich der Heißformmaschine mit einer Mehrzahl von kreisförmig angeordneten Bearbeitungsstationen und einem darüber angeordneten Drehtisch, in dem zu bearbeitende Glasrohre gehalten und durch eine schrittweise Drehbewegung von einer Bearbeitungsstation zur nächsten bewegbar sind, wird die Aufgabe gelöst, indem diese eine oben beschriebene Antriebseinheit umfasst.

Die Aufgabe wird weiterhin gelöst durch ein Verfahren zum Nachrüsten einer Heißformmaschine mit einer Mehrzahl von kreisförmig angeordneten Bearbeitungsstationen und einem darüber angeordneten Drehtisch, in dem zu bearbeitende Glasrohre gehalten und durch eine schrittweise Drehbewegung von einer Bearbeitungsstation zur nächsten bewegbar sind, wobei der Drehtisch antriebsseitig mit einem Schrittgetriebe verbunden ist, welches eine Bewegung einer Antriebswelle in eine zyklische Schrittbewegung übersetzt, deren Schrittzyklus eine Bewegungsphase und eine daran anschließende Stillstandsphase umfasst, wobei in der Heißformmaschine eine oben beschriebene Steuereinheit nachgerüstet wird. Weist die Heißformmaschine einen hierfür geeigneten Antriebsmotor auf, lassen sich die oben beschriebenen Vorteile ggf. schon durch Austausch der Steuerung und die damit verbundene Umsetzung des oben beschriebenen Verfahrens erreichen.

In vorteilhafter Ausgestaltung des Verfahrens wird jedoch in der Heißformmaschine ein Antriebsmotor zum Antreiben der Antriebswelle mit einer variablen, vorgebbaren Winkelgeschwindigkeit nachgerüstet. Vorteilhafterweise ist ein derartiger Antriebsmotor wie oben beschrieben als Synchronmotor ausgebildet.

Die mit der Erfindung erzielten Vorteile bestehen insbesondere darin, dass durch eine Erhöhung der Antriebsgeschwindigkeit des Schrittgetriebes in der Bewegungsphase des Drehtisches einer Heißformmaschine, ggf. in Verbindung mit dem Einbau eines hierfür geeigneten Antriebsmotors, eine Verkürzung der Zykluszeit und damit eine Erhöhung der Effizienz erreicht werden, ohne dass die Bearbeitungszeit verkürzt werden muss.

Das beschriebene Verfahren eignet sich für jegliche vertikal ausgerichteten Rundtaktmaschinen zur Umformung von Glasrohren zu pharmazeutischen Primärverpackungen wie Spritzen, Karpulen, Flaschen und Ampullen. Sie eignet sich sowohl für neue als auch für bereits im Einsatz befindliche Maschinen als Nachrüstung.

In der Praxis zeigen mit dem beschriebenen Verfahren angesteuerte Maschinen Performance-Steigerungen bei gleicher Qualität und gleichem Prozess, wenn man umgebaute Maschinen mit nicht umgebauten Maschinen vergleicht. Mit einer umgebauten Maschine wurden alle Restrisiken abgeprüft, insbesondere auch, ob die höhere Dynamik der Schwenkung des Kranzes einen Einfluss auf die mitgeschwenkten Glasrohre hat, was nicht der Fall ist. Es hat sich gezeigt, dass die kürzere Transferzeit von Station zu Station bei einigen Produkten eine Reduktion der Abkühlung des aufgeheizten Produktes mit sich bringt. Diese Tatsache erfordert leichte Anpassungen an der Brennerleistung, was aber ohnehin Bestandteil der erforderlichen Einstellarbeiten beim Produktwechsel an der Maschine ist.

Ausführungsbeispiele der Erfindung werden anhand von Zeichnungen näher erläutert. Darin zeigen:
- FIG 1: in einer schematischen Aufsicht Teile einer Heißformmaschine,
- FIG 2: in einer schematischen Seitenansicht Teile der Heißformmaschine,
- FIG 3: schematisch den Aufbau eines Zylinderkurvengetriebes,
- FIG 4: eine Prinzipskizze einer Antriebseinheit für eine Heißformmaschine mit Synchronmotor,
- FIG 5: eine Grafik, die die Schrittposition einer Säule der Heißformmaschine gegen die Winkelposition der Antriebswelle des Zylinderkurvengetriebes nach dem Stand der Technik zeigt,
- FIG 6: eine Grafik, die die Winkelgeschwindigkeit der Antriebswelle gegen die Winkelposition der Antriebswelle zeigt,
- FIG 7: eine Grafik, die die Schrittposition einer Säule der Heißformmaschine gegen die Winkelposition der Antriebswelle des Zylinderkurvengetriebes mit veränderlicher Winkelgeschwindigkeit zeigt, und

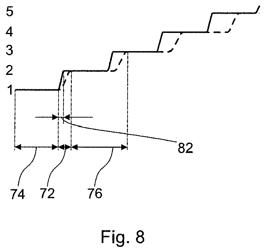

- FIG 8: eine Grafik, die die Schrittposition einer Säule der Heißformmaschine gegen die Winkelposition der Antriebswelle des Zylinderkurvengetriebes mit veränderlicher Winkelgeschwindigkeit über mehrere Schrittzyklen zeigt.

Gleiche Teile sind in allen Zeichnungen mit denselben Bezugszeichen versehen.

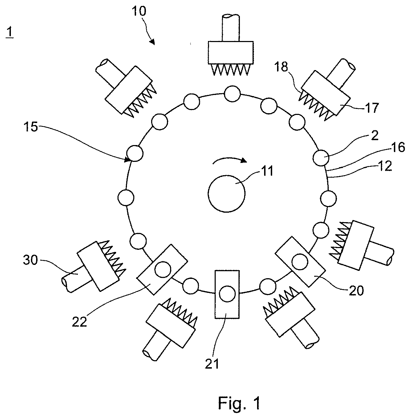

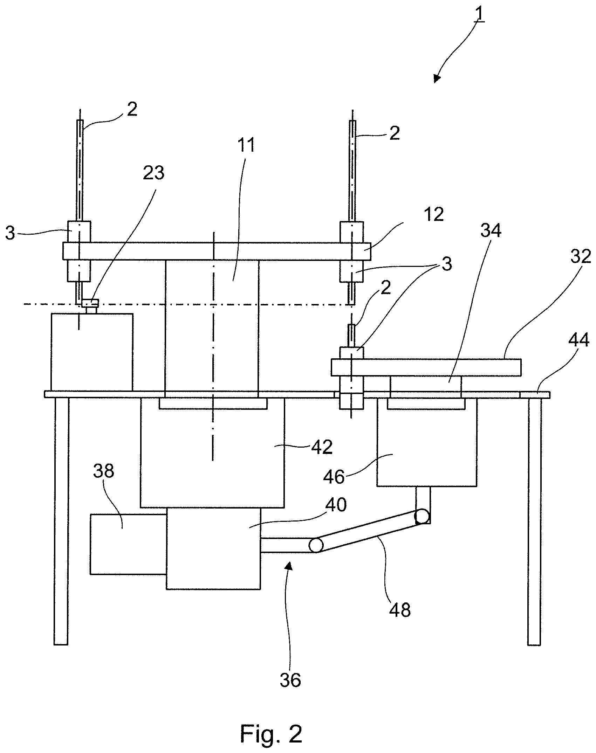

Die Fig. 1 und 2 zeigen in einer schematischen Aufsicht bzw. Seitenansicht den grundsätzlichen Aufbau einer Heißformmaschine 1, die der Herstellung von Pharma-Primärverpackungen aus Glas aus einem Glasrohr 2 dient, das von oben her vertikal ausgerichtet zugeführt wird. Die herzustellenden Glasbehältnisse, beispielsweise Glasfläschchen (Vials), Karpulen oder Spritzenkörper, dienen der Aufbewahrung und/oder Verabreichung von pharmazeutischen Wirkstoffen. Die Heißformmaschine 1 umfasst dabei eine sog. Muttermaschine 10, die insbesondere einer Heißumformung des zugeführten Glasrohrs 2 an einem dem späteren Boden oder offenen Ende des Glasbehältnisses gegenüberliegenden Ende dient, insbesondere zum Anformen eines Halses mit einer Halsöffnung.

Glasrohre 2 werden an der Zuführposition 15 aus einem nicht näher dargestellten Drehtisch zugeführt. Sie fallen dabei durch Öffnen einer Haltevorrichtung im Drehtisch nach unten, werden durch einen nicht dargestellten Rohrfänger aufgefangen und dann in Haltefuttern 3 auf einer geeigneten Bearbeitungshöhe gehalten, die über den Umfang eines Drehtisches 12 verteilt angeordnet sind. Der Drehtisch 12 ist in der Art eines Drehkranzes mit Haltefuttern 3 ausgebildet und ist fix mit der zugeordneten Säule 11 verbunden und auf einem noch zu FIG 2 näher erläuterten Schrittgetriebe 42 drehbeweglich gelagert. Der Drehtisch 12 und die Säule 11 werden schrittweise um die Achse der Säule 11 gedreht bzw. geschwenkt, wie im Folgenden noch näher beschrieben wird. Dabei werden die an den Haltefuttern 3 gehaltenen Glasrohre 2 schrittweise an Gasbrennern 17 und verschiedenen Bearbeitungsstationen 20-23 vorbeigeführt, an denen während einer jeweiligen Stillstandszeit die Bearbeitung und Heißumformung zu den Glasbehältnissen erfolgt.

Nach Passieren der Bearbeitungsstationen 20-23 werden die Glasbehältnisse zumindest im Bereich des Halses und der Halsöffnung nicht-taktil mit Hilfe eines Inspektionssystems 30 geprüft und ihre Eigenschaften dokumentiert. Bei dem Inspektionssystem 30 kann es sich beispielsweise um eine Videokamera mit einer Bildauswertungssoftware handeln, womit anhand der von der Videokamera aufgenommenen Bilder geometrischen Abmessungen der Glasbehältnisse ausgewertet werden, beispielsweise im Falle von Vials die geometrischen Abmessungen. Abschließend werden die Glasbehältnisse an der Position 16 an eine nachgeordnete Bearbeitungsmaschine 32 übergeben, die nur in Fig. 2 gezeigt ist. Die nachgeordnete Bearbeitungsmaschine weist in gleicher Weise eine Säule 34 auf, mit der der obere Kranz fest verbunden ist und auf dem ebenfalls noch zu FIG 2 näher erläuterten Schrittgetriebe 46 wie zur ersten Maschine 10 beschrieben drehbar gelagert ist.

Die Antriebseinheit beider Maschinen 10, 32 ist ebenfalls in Fig. 2 dargestellt. Sie umfasst im Ausführungsbeispiel einen Antriebsmotor 38 mit einem Untersetzungsgetriebe 40 und einem leistungsfähigen Schrittgetriebe 42, auf welchem direkt die Säule 11 der Muttermaschine 10 angebaut ist. Das Untersetzungsgetriebe 40 und der Antriebsmotor 38 sind unter der Arbeitsebene (Tischplatte) 44 montiert. Auf der Tischplatte sind die oben beschriebenen Bearbeitungsstationen 20 - 23 und Wärmequellen zur Umformung montiert. Zur Realisierung der bereits oben beschriebenen Übergabe von der Muttermaschine 10 zur nachgeordneten Bearbeitungsmaschine 32 sind die Bewegungen der Säulen 11, 34 synchronisiert. Hierfür ist ein zweites Schrittgetriebe 46 unterhalb der Säule 34 vorgesehen, welches durch eine Kardanwelle 48 fix mit dem Untersetzungsgetriebe 40 gekoppelt ist.

Im oben beschriebenen Produktionslauf treibt der Antriebsmotor 38 über das Untersetzungsgetriebe 40 die Schrittschaltgetriebe 42, 46 an. Im Stand der Technik erfolgt dies mit konstanter Drehzahl. Die Kurve der als Zylinderkurvengetriebe ausgebildeten Schrittgetriebe 42, 46 übersetzt die im Stand der Technik konstante Eingangsdrehzahl in eine Schwenkung von einer Arbeitsposition des Drehtisches 12 zur nächsten, wie oben beschrieben. Zwischen zwei Schwenkungen steht der Drehtisch 12 still und dieser Stillstand wird für die Einzelschritte der Umformung des Glasrohrs 2 genutzt.

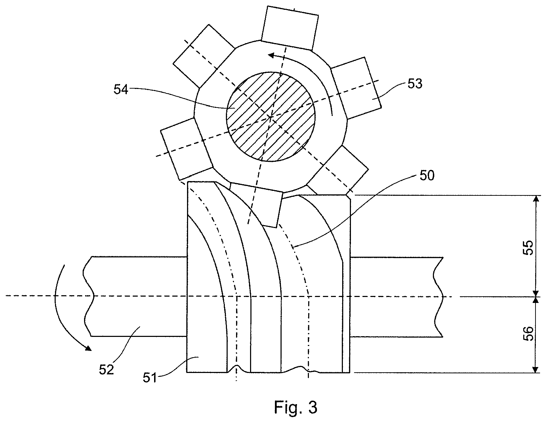

Der prinzipielle Aufbau der Schrittgetriebe 42, 46 ist in Fig. 3 gezeigt. Die Kurvenkontur 50 des jeweils als Zylinderkurvengetriebe ausgebildeten Schrittgetriebes 42, 46 ist in der zylindrischen Mantelflache 51 der Antriebswelle 52 eingearbeitet und wird über Kurvenrollen 53 auf die Abtriebsachse 54, die mit der jeweiligen Säule 11, 34 verbunden ist, übertragen. Eine Umdrehung der Antriebswelle 52 bildet dabei einen Schrittzyklus (von einer Arbeitsposition zur nächsten) ab. Bei konstanter Antriebsdrehzahl ergibt sich ein fixes Verhältnis zwischen Stillstandsphase an der Arbeitsposition und Bewegungsphase zum Schwenken, die durch die Form der Kurvenkontur 50 bestimmt ist. Im Stand der Technik sind die Kurven von Schrittgetrieben für Heißformmaschinen so gestaltet, dass der Schwenkbereich 55 zwischen ca. 90 - 105° beansprucht (Transferwinkel) und die restlichen 255 - 270° für den Stillstandsbereich 56 (Bearbeitungswinkel) benötigt werden.

Hierbei ergibt sich das Problem, dass bei Glasrohren 2 mit größerem Durchmesser eine längere Bearbeitungszeit benötigt wird, dadurch aber auch die (unproduktive) Schwenkzeit verlängert wird.

Zur Lösung dieses Problems wird - wie im Folgenden erläutert das Verhältnis von Bewegungsphase zu Stillstandsphase verändert, mit dem Ziel, mehr Produkte pro Minute produzieren zu können. Das Verhältnis wird verändert, indem die Drehzahl wahrend jedem Schrittzyklus verändert wird, um mit einer anderen Geschwindigkeit den Schwenkbereich 55 der Kurvenkontur 50 zu durchfahren als den Stillstandsbereich 56. Hierfür wird zum einen eine veränderte Steuerung benötigt, zum anderen ein Synchronmotor (Servomotor) anstelle des Asynchronmotors genutzt, wie im Folgenden beschrieben wird.

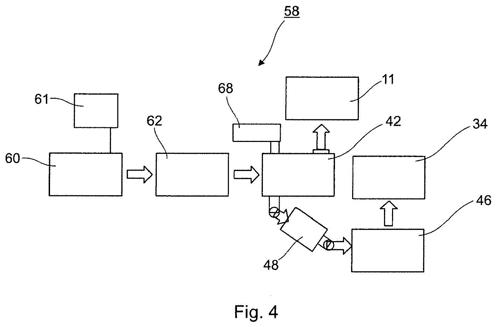

Fig. 4 zeigt die so veränderte Antriebseinheit 58 für die Säulen 11, 34 einer vertikal ausgerichteten Heißformmaschine 1 wie in Fig. 1 und 2 beschrieben. Diese umfasst zunächst einen Synchronmotor 60 anstelle des bisherigen Asynchronmotors. Der Synchronmotor 60 wird mit einem Servoregler 61 gesteuert. Je nach Auslegung des bisher verwendeten Untersetzungsgetriebes 40 und der gewünschten Drehzahländerungen zur Leistungssteigerung muss unter Umständen ein leistungsfähigeres Untersetzungsgetriebe 62 eingesetzt werden (Auslegung erforderlich). Das Untersetzungsgetriebe 62 treibt dann das unverändert beibehaltene Schrittgetriebe 42 der Muttermaschine 10 an. Ebenso bleibt der übrige mechanische Teil der Antriebseinheit 58 wie oben beschrieben erhalten:
Am anderen Ende der durchlaufenden Antriebswelle 52 des Schrittgetriebes 42 wird mittels Kardanwelle 48 die Antriebsleistung auf ein zweites Schrittgetriebe 46 für die nachgeordnete Bearbeitungsmaschine 32 übertragen. Die Kardanwelle 48 ermöglicht die Höhenverstellung der zweiten Säule 34, um die Produktlänge verändern zu können. Ein Encoder 68 ermöglicht die Positionsbestimmung und den Aufbau eines Regelkreises mit dem Servoregler 61 des Synchronmotors 60. Mittels Servoregler 61 wird, durch eine nicht näher dargestellte Steuereinheit gesteuert, die Drehzahl des Synchronmotors 60 innerhalb jedes Schrittzyklus geändert. Ein Schrittzyklus entspricht im Ausführungsbeispiel jeweils einer volle Umdrehung (360°) der Antriebswelle 52 des Schrittgetriebes 42, 46 und ergibt eine Schwenkung von Arbeitsposition zu Arbeitsposition des Kranzes an der Abtriebsseite des Schrittgetriebes 42, 46.

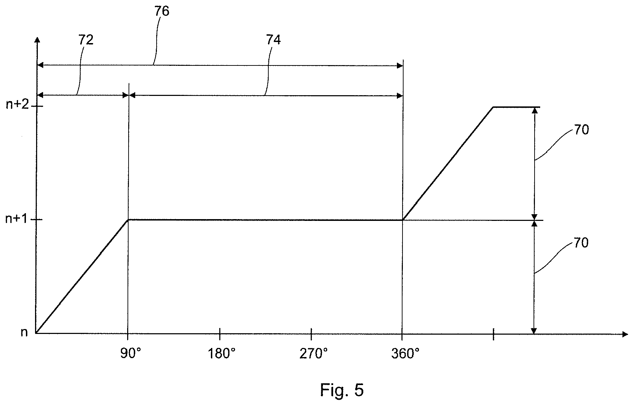

Der prinzipielle Zusammenhang zwischen Position der jeweiligen Säule 11, 34 gegen die Winkelposition der Antriebswelle 52 ist in der Grafik nach Fig. 5 gezeigt, die letztere gegen erstere aufträgt. Auf der Abszissenachse ist die Winkelposition der Antriebswelle 52 des Schrittgetriebes 42, 46 aufgetragen, die Ordinatenachse zeigt die Position der Säule 11, 34 in Einheiten von Bearbeitungsstationen (n). Zwischen 0° und 90° der Antriebswelle 52 bewegt sich die Säule 11, 34 so, dass das Glasrohr 2 von Position n zu Position n+1 bewegt wird. Dies entspricht einer Bewegungsphase 72. Von 90° bis 360° (=0°) dauert die Stillstandsphase 74 an, es findet keine Bewegung an der Säule 11, 34 statt. Bewegungsphase 72 und Stillstandsphase 74 bilden einen Schrittzyklus 76. Der Schrittzyklus 76 beginnt danach identisch von neuem.

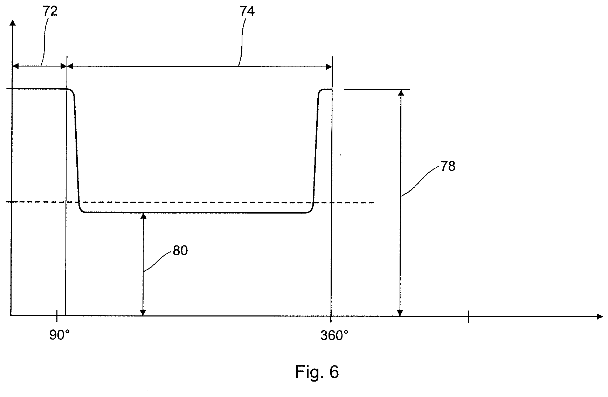

Über jeden Schrittzyklus 76 wird die Winkelgeschwindigkeit oder Drehzahl der Antriebswelle 52 mittels der beschriebenen Steuerung nun so geändert, wie in Fig. 6 gezeigt. Diese trägt die Winkelgeschwindigkeit der Antriebswelle 52 gegen die Winkelposition der Antriebswelle 52 auf. Da die Drehzahl während der Bewegungsphase 72 nicht geändert werden sollte, um die Kurvenrollen 53 nicht zu überlasten oder die maximale Flächenpressung auf der Kurvenkontur 50 nicht zu überschreiten, wird die Drehzahl nur in der Stillstandsphase 74 geändert. Die Bewegungsphase 72 wird immer mit einem Wert 78 durchfahren, der möglichst nahe am mechanisch maximal möglichen Wert für die Winkelgeschwindigkeit liegt, d.h. möglichst 80, 90 oder noch mehr Prozent dieses maximal möglichen Wertes. Die Drehzahl innerhalb der Stillstandsphase 74 kann nahezu frei gewählt werden, weil dabei nicht die Kurvenkontur 50 belastet wird, sondern nur das Untersetzungsgetriebe 62. Um den Prozess auf der Heißformmaschine 1 nicht andern zu müssen, wird also für eine Optimierung bei einem Produkt die gleiche Stillstandszeit (Bearbeitungszeit) wie zum Stand der Technik erhalten bleiben.

Um dies zu erreichen, wird der Zyklus neu wie folgt durchlaufen: Unmittelbar nach der Bewegungsphase 72 mit Maximaldrehzahl beim ersten Wert 78 wird die Winkelgeschwindigkeit auf einen Wert 80 reduziert, welcher tiefer ist als im Prozess nach dem Stand der Technik mit Asynchronmotor liegt. Auf diesem Wert 80 verbleibt die Winkelgeschwindigkeit für eine Zeitspanne, die mehr als 80% der Stillstandsphase 74 ausmacht. Kurz vor dem Erreichen der nächsten Schwenkung wird die Winkelgeschwindigkeit wieder auf den vorherigen Wert 78 angehoben. Beschleunigung und Verzögerung erfolgen dabei mit der höchstmöglichen Winkelbeschleunigung, welche das Untersetzungsgetriebe 40, 62 als maximale Last zulässt. Diese maximale Beschleunigung wird auf Basis des zulässigen Moments für das Getriebe errechnet. Alternativ oder zusätzlich ist Bedingung, dass die Zeit zum Reduzieren der Drehzahl plus die Zeit mit konstanter Drehzahl plus die Zeit zum Beschleunigen der Drehzahl insgesamt identisch mit der Zeit ist, die beim Stand der Technik die Zeit mit konstanter Drehzahl in der Stillstandsphase 74 war. Für den Einsatz mit üblichen Taktraten ergibt die Optimierung ein Ausbeutesteigerungspotential je nach Produkt von bis zu 20%.

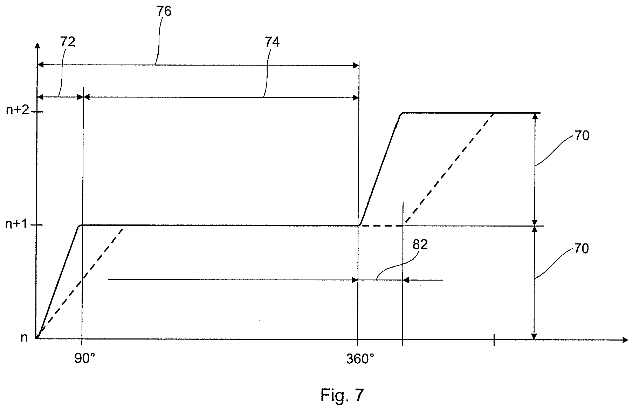

Durch die beschriebene Änderung der Winkelgeschwindigkeit der Antriebswelle 52 des Schrittgetriebes 42, 46 entsteht eine veränderte Schwenkbewegung der Säule 11, 34, die in Fig. 7 dargestellt ist. Fig. 7 ist eine Grafik, die identische Größen wie in Fig. 5 gegeneinander aufträgt. Die Kurve aus Fig. 5 ist gestrichelt gezeigt. Die durchgezogene Kurve zeigt nun die Veränderung bei variabler Winkelgeschwindigkeit gemäß Fig. 6: Bei gleicher Stillstandsphase 74 und verkürzter Bewegungsphase 72 für das Schwenken von einer Position zur nächsten 70 wird die Dauer des Schrittzyklus um einen Betrag 82 verkürzt. Durch die Erfindung kann bei jeder gewählten Zeit für die Stillstandsphase 74 (Taktrate) mit der minimalsten oder einer wählbaren Bewegungsphase 72 geschwenkt werden. Somit wird das Verhältnis zwischen Bewegungsphase 72 und Stillstandsphase 74 variabel und ist nicht mehr fix wie beim Stand der Technik.

Die verkürzte Transferzeit bewirkt, dass mehr Schwenkungen von Position zu Position pro Zeiteinheit gemacht werden können wie beim Stand der Technik. Das hier beschriebene Konzept zeigt beim Versuch auf einer umgebauten Maschine bis Takt 44 (44 Schwenkungen pro Minute = Produkte pro Minute) eine gute Bewegungscharakteristik und keine Nachteile am Produkt. Die reduzierte Schwenkzeit führt zu einer höheren Stückzahl Endprodukte pro Minute. Beispielsweise können beim Stand der Technik mit einem Maschinentakt von 20 Produkten pro Minute durch die Erfindung mit derselben Bearbeitungszeit 23,2 Stück pro Minute resultieren, was einer ProduktionsSteigerung von 16% entspricht. Bei schnelleren Taktraten wird der Effekt kleiner; so ist beispielsweise bei Takt 40 eine Verbesserung zu 40.8 erreichbar, was aber noch immer einer Steigerung von 2% entspricht.

### Bezugszeichenliste

- 1: Heißformmaschine
- 2: Glasrohr oder halbfertiges Zwischenprodukt
- 3: Haltefutter
- 10: Muttermaschine
- 11: Säule
- 12: Drehtisch
- 15: Zuführabschnitt
- 16: Übergabeabschnitt
- 17: Gasbrenner
- 18: Brennerflamme
- 20, 21, 22, 23: Bearbeitungsstation
- 30: nicht-taktiles Inspektionssystem, z.B. Videokamera
- 32: Bearbeitungsmaschine
- 34: Säule
- 36: Antriebseinheit
- 38: Antriebsmotor
- 40: Untersetzungsgetriebe
- 42: Schrittgetriebe
- 44: Arbeitsebene
- 46: Schrittgetriebe
- 48: Kardanwelle
- 50: Kurvenkontur
- 51: Mantelfläche
- 52: Antriebswelle
- 53: Kurvenrolle
- 54: Abtriebswelle
- 55: Schwenkbereich
- 56: Stillstandsbereich
- 58: Antriebseinheit
- 60: Synchronmotor
- 61: Servoregler
- 62: Untersetzungsgetriebe
- 68: Encoder
- 70: Bewegung um eine Position n
- 72: Bewegungsphase
- 74: Stillstandsphase
- 76: Schrittzyklus
- 78, 80: Wert für die Winkelgeschwindigkeit
- 82: Betrag der Zeitverkürzung

## Patentansprüche

1. Verfahren zum Steuern des Drehantriebs einer Heißformmaschine (1) mit einer Mehrzahl von kreisförmig angeordneten Bearbeitungsstationen (20 - 23) und einem darüber angeordneten Drehtisch (12), in dem zu bearbeitende Glasrohre (2) gehalten und durch eine schrittweise Drehbewegung von einer Bearbeitungsstation (20 - 23) zur nächsten bewegt werden,
wobei der Drehtisch (12) mittels eines Schrittgetriebes (42, 46) angetrieben wird, durch welches eine Bewegung einer Antriebswelle (52) in eine zyklische Schrittbewegung übersetzt wird, deren Schrittzyklus (76) eine Bewegungsphase (72) und eine daran anschließende Stillstandsphase (74) umfasst,
**dadurch gekennzeichnet, dass** die Winkelgeschwindigkeit der Antriebswelle (52) zu einem ersten Zeitpunkt in der Bewegungsphase (72) eines Schrittzyklus (76) einen ersten Wert (78) annimmt, und zu einem zweiten Zeitpunkt in der Stillstandsphase (74) desselben Schrittzyklus (76) einen zweiten, von dem ersten Wert (78) unterschiedlichen, Wert (80) annimmt.

2. Verfahren nach Anspruch 1, bei dem der erste Wert (78) höher ist als der zweite Wert (80).

3. Verfahren nach einem der vorhergehenden Ansprüche, bei dem die Winkelgeschwindigkeit während der Bewegungsphase (72) konstant ist.

4. Verfahren nach Anspruch 3, bei dem anhand einer mechanischen Belastbarkeit eine maximale Winkelbeschleunigung des Drehtisches (12) in der Bewegungsphase (72) ermittelt wird, und die Winkelgeschwindigkeit während der Bewegungsphase (72) so gewählt wird, dass diese maximale Winkelbeschleunigung im Wesentlichen erreicht und/oder nicht überschritten wird.

5. Verfahren nach einem der vorhergehenden Ansprüche, bei dem die Winkelgeschwindigkeit während einer Zeitspanne innerhalb der Stillstandsphase (74) konstant ist.

6. Verfahren nach Anspruch 5, bei dem die Zeitspanne mehr als 60%, vorzugsweise mehr als 80% der Stillstandsphase (74) umfasst.

7. Verfahren nach Anspruch 5 oder 6, bei dem anhand einer mechanischen Belastbarkeit eine maximale Winkelbeschleunigung der Antriebswelle (52) ermittelt wird, und die Veränderung der Winkelgeschwindigkeit während der Stillstandsphase (72) außerhalb der Zeitspanne so gewählt wird, dass diese maximale Winkelbeschleunigung im Wesentlichen erreicht und/oder nicht überschritten wird.

8. Verfahren nach einem der vorhergehenden Ansprüche, bei dem eine Mehrzahl von Schrittzyklen (76) unmittelbar aufeinander folgt, wobei die Winkelgeschwindigkeitsverläufe jedes Schrittzyklus (76) identisch sind.

9. Steuereinheit für einen Drehantrieb einer Heißformmaschine (1) mit einer Mehrzahl von kreisförmig angeordneten Bearbeitungsstationen (20 - 23) und einem darüber angeordneten Drehtisch (12), in dem zu bearbeitende Glasrohre (2) gehalten und durch eine schrittweise Drehbewegung von einer Bearbeitungsstation (20 - 23) zur nächsten bewegbar sind,
wobei der Drehtisch (12) antriebsseitig mit einem Schrittgetrieb (42, 46) verbunden ist, welches eine Bewegung einer Antriebswelle (52) in eine zyklische Schrittbewegung übersetzt, deren Schrittzyklus (76) eine Bewegungsphase (72) und eine daran anschließende Stillstandsphase (74) umfasst,
**dadurch gekennzeichnet, dass** die Steuereinheit dazu ausgebildet ist, die Antriebswelle (52) des Schrittgetriebes (42, 46) mit einer variablen Winkelgeschwindigkeit derart anzusteuern, dass
die Winkelgeschwindigkeit der Antriebswelle (52) zu einem ersten Zeitpunkt in der Bewegungsphase (72) eines Schrittzyklus (76) einen ersten Wert (78) annimmt, und zu einem zweiten Zeitpunkt in der Stillstandsphase (74) desselben Schrittzyklus (76) einen zweiten, von dem ersten Wert (78) unterschiedlichen, Wert (80) annimmt.

10. Steuereinheit nach Anspruch 9, bei der der erste Wert (78) höher ist als der zweite Wert (80).

11. Steuereinheit nach Anspruch 9 oder 10, bei dem die Winkelgeschwindigkeit während der Bewegungsphase (72) konstant ist.

12. Steuereinheit nach einem der Ansprüche 9 bis 11, bei der die Winkelgeschwindigkeit während einer Zeitspanne innerhalb der Stillstandsphase (74) konstant ist.

13. Steuereinheit nach Anspruch 12, bei der die Zeitspanne mehr als 60%, vorzugsweise mehr als 80% der Stillstandsphase (74) umfasst.

14. Steuereinheit nach einem der Ansprüche 9 bis 13, bei der eine Mehrzahl von Schrittzyklen (76) unmittelbar aufeinander folgt, wobei die Winkelgeschwindigkeitsverläufe jedes Schrittzyklus (76) identisch sind.

15. Antriebseinheit (58) für eine Heißformmaschine (1) mit einer Mehrzahl von kreisförmig angeordneten Bearbeitungsstationen (20 - 23) und einem darüber angeordneten Drehtisch (12), in dem zu bearbeitende Glasrohre (2) gehalten und durch eine schrittweise Drehbewegung von einer Bearbeitungsstation (20 - 23) zur nächsten bewegbar sind,
wobei der Drehtisch (12) antriebsseitig mit einem Schrittgetrieb (42, 46) verbunden ist, welches eine Bewegung einer Antriebswelle (52) in eine zyklische Schrittbewegung übersetzt, deren Schrittzyklus (76) eine Bewegungsphase (72) und eine daran anschließende Stillstandsphase (74) umfasst,
umfassend einen Antriebsmotor (60), ausgebildet zum Antreiben der Antriebswelle (52) mit einer variablen, vorgebbaren Winkelgeschwindigkeit, und
eine Steuereinheit nach einem der Ansprüche 9 bis 14.

16. Antriebseinheit (58) nach Anspruch 15, wobei der Antriebsmotor (60) als Synchronmotor (60) ausgebildet ist.

17. Antriebseinheit (58) nach Anspruch 15 oder 16, wobei das Schrittgetriebe (42, 46) als Zylinderkurvengetriebe ausgebildet ist.

18. Heißformmaschine (1) mit einer Mehrzahl von kreisförmig angeordneten Bearbeitungsstationen (20 - 23) und einem darüber angeordneten Drehtisch (12), in dem zu bearbeitende Glasrohre (2) gehalten und durch eine schrittweise Drehbewegung von einer Bearbeitungsstation (20 - 23) zur nächsten bewegbar sind, und mit einer Antriebseinheit (58) nach einem der Ansprüche 15 bis 17.

19. Verfahren zum Nachrüsten einer Heißformmaschine (1) mit einer Mehrzahl von kreisförmig angeordneten Bearbeitungsstationen (20 - 23) und einem darüber angeordneten Drehtisch (12), in dem zu bearbeitende Glasrohre (2) gehalten und durch eine schrittweise Drehbewegung von einer Bearbeitungsstation (20 - 23) zur nächsten bewegbar ist,
wobei der Drehtisch (12) antriebsseitig mit einem Schrittgetriebe (42, 46) verbunden ist, welches eine Bewegung einer Antriebswelle (52) in eine zyklische Schrittbewegung übersetzt, deren Schrittzyklus (76) eine Bewegungsphase (72) und eine daran anschließende Stillstandsphase (74) umfasst,
wobei in der Heißformmaschine (1) eine Steuereinheit nach einem der Ansprüche 9 bis 14 nachgerüstet wird.

20. Verfahren nach Anspruch 19, bei dem in der Heißformmaschine (1) ein Antriebsmotor (60) zum Antreiben der Antriebswelle (52) mit einer variablen, vorgebbaren Winkelgeschwindigkeit nachgerüstet wird.

21. Verfahren nach Anspruch 19 oder 20, bei dem der Antriebsmotor (60) als Synchronmotor (60) ausgebildet ist.

## Claims

1. Method for controlling the rotary drive of a hot-moulding machine (1) having a plurality of processing stations (20-23) which are arranged in a circular manner and a rotary table (12) which is arranged thereabove and in which glass pipes (2) which are intended to be processed are retained and are moved by a gradual rotary movement from one processing station (20-23) to the next,
wherein the rotary table (12) is driven by means of a stepping gear (42, 46), by means of which a movement of a drive shaft (52) is translated into a cyclical step movement whose step cycle (76) comprises a movement phase (72) and a subsequent stop phase (74),
**characterised in that** the angular speed of the drive shaft (52) at a first time in the movement phase (72) of a step cycle (76) assumes a first value (78) and at a second time in the stop phase (74) of the same step cycle (76) assumes a second value (80) which is different from the first value (78) .

2. Method according to claim 1, wherein the first value (78) is higher than the second value (80).

3. Method according to either of the preceding claims, wherein the angular speed is constant during the movement phase (72).

4. Method according to claim 3, wherein with reference to a mechanical durability a maximum angular acceleration of the rotary table (12) in the movement phase (72) is established, and the angular speed during the movement phase (72) is selected in such a manner that this maximum angular acceleration is substantially reached and/or not exceeded.

5. Method according to any one of the preceding claims, wherein the angular speed is constant during a time period within the stop phase (74).

6. Method according to claim 5, wherein the time period comprises more than 60%, preferably more than 80% of the stop phase (74).

7. Method according to claim 5 or claim 6, wherein with reference to a mechanical durability, a maximum angular acceleration of the drive shaft (52) is established, and the change of the angular speed during the stop phase (72) is selected outside the time period in such a manner that this maximum angular acceleration is substantially reached and/or not exceeded.

8. Method according to any one of the preceding claims, wherein a plurality of step cycles (76) follow directly one after the other, wherein the angular speed paths of each step cycle (76) are identical.

9. Control unit for a rotary drive of a hot-moulding machine (1) having a plurality of processing stations (20-23) which are arranged in a circular manner and a rotary table (12) which is arranged thereabove and in which glass pipes (2) which are intended to be processed are retained and can be moved by means of a stepped rotational movement from one processing station (20-23) to the next,
wherein the rotary table (12) is connected at the drive side to a stepping gear (22, 46), which translates a movement of a drive shaft (52) into a cyclical step movement, whose step cycle (76) comprises a movement phase (72) and a subsequent stop phase (74),
**characterised in that** the control unit is constructed to control the drive shaft (52) of the stepping gear (42, 46) at a variable angular speed in such a manner that
the angular speed of the drive shaft (52) at a first time in the movement phase (72) of a step cycle (76) assumes a first value (78), and
at a second time in the stop phase (74) of the same step cycle (76), assumes a second value (80) which is different from the first value (78).

10. Control unit according to claim 9, wherein the first value (78) is higher than the second value (80).

11. Control unit according to claim 9 or claim 10, wherein the angular speed during the movement phase (72) is constant.

12. Control unit according to any one of claims 9 to 11, wherein the angular speed during a time period within the stop phase (74) is constant.

13. Control unit according to claim 12, wherein the time period comprises more than 60%, preferably more than 80% of the stop phase (74).

14. Control unit according to any one of claims 9 to 13, wherein a plurality of step cycles (76) follow one directly after the other, wherein the angular speed paths of each step cycle (76) are identical.

15. Drive unit (58) for a hot-moulding machine (1) having a plurality of processing stations (20-23) which are arranged in a circular manner and a rotary table (12) which is arranged thereabove and in which glass pipes (2) which are intended to be processed are retained and can be moved by a gradual rotary movement from one processing station (20-23) to the next,
wherein the rotary table (12) is connected at the drive side to a stepping gear (42, 46), which translates a movement of a drive shaft (52) into a cyclical step movement whose step cycle (76) comprises a movement phase (72) and a subsequent stop phase (74),
comprising a drive motor (60) which is constructed to drive the drive shaft (52) at a variable predeterminable angular speed, and
a control unit according to any one of claims 9 to 14.

16. Drive unit (58) according to claim 15, wherein the drive motor (60) is constructed as a synchronous motor (60).

17. Drive unit (58) according to claim 15 or claim 16, wherein the stepping gear (42, 46) is constructed as a cylinder cam gear.

18. Hot-moulding machine (1) having a plurality of processing stations (20-23) which are arranged in a circular manner and a rotary table (12) which is arranged thereabove and in which glass pipes (2) which are intended to be processed are retained and can be moved by a gradual rotary movement from one processing station (20-23) to the next, and having a drive unit (58) according to any one of claims 15 to 17.

19. Method for retrofitting a hot-moulding machine (1) having a plurality of processing stations (20-23) which are arranged in a circular manner and a rotary table (12) which is arranged thereabove and in which glass pipes (2) which are intended to be processed are retained and can be moved by a gradual rotary movement from one processing station (20-23) to the next,
wherein the rotary table (12) is connected at the drive side to a stepping gear (42, 46) which translates a movement of a drive shaft (52) into a cyclical step movement whose step cycle (76) comprises a movement phase (72) and a subsequent stop phase (74),
wherein a control unit according to any one of claims 9 to 14 is retrofitted in the hot-moulding machine (1).

20. Method according to claim 19, wherein a drive motor (60) for driving the drive shaft (52) at a variable, predeterminable angular speed is retrofitted in the hot-moulding machine (1).

21. Method according to claim 19 or claim 20, wherein the drive motor (60) is constructed as a synchronous motor (60).

## Revendications

1. Procédé de commande de l'entraînement rotatif d'une machine de formage à chaud (1) avec une pluralité de stations de traitement (20 - 23) disposées en cercle et une table rotative (12) disposée au-dessus, dans laquelle des tubes de verre (2) à traiter sont maintenus et sont déplacés par un mouvement rotatif pas-à-pas d'une station de traitement (20 - 23) vers la suivante,
dans lequel la table rotative (12) est entraînée au moyen d'un mécanisme pas-à-pas (42, 46) grâce auquel un mouvement d'un arbre d'entraînement (52) est converti en un mouvement pas-à-pas cyclique dont le cycle de pas (76) comprend une phase de mouvement (72) puis une phase d'immobilisation (74),
**caractérisé en ce que** la vitesse angulaire de l'arbre d'entraînement (52) adopte, à un premier moment de la phase de mouvement (72) d'un cycle pas-à-pas (76), une première valeur (78) et, à un deuxième moment de la phase d'immobilisation (74) du même cycle pas-à-pas (76), une deuxième valeur (80), différente de la première valeur (78).

2. Procédé selon la revendication 1, dans lequel la première valeur (78) est supérieure à la deuxième valeur (80).

3. Procédé selon l'une des revendications précédentes, dans lequel la vitesse angulaire est constante pendant la phase de mouvement (72).

4. Procédé selon la revendication 3, dans lequel, à l'aide d'une capacité de charge mécanique, une accélération angulaire maximale de la table rotative (12) dans la phase de mouvement (72) est déterminée et la vitesse angulaire pendant la phase de mouvement (72) est choisie de façon à ce que cette accélération angulaire maximale soit globalement atteinte et/ou ne soit pas dépassée.

5. Procédé selon l'une des revendications précédentes, dans lequel la vitesse angulaire est constante pendant un laps de temps à l'intérieur de la phase d'immobilisation (74).

6. Procédé selon la revendication 5, dans lequel le laps de temps comprend plus de 60 %, de préférence plus de 80 % de la phase d'immobilisation (74).

7. Procédé selon la revendication 5 ou 6, dans lequel, à l'aide d'une capacité de charge mécanique, une accélération angulaire maximale de l'arbre d'entraînement (52) est déterminé et la variation de la vitesse angulaire pendant la phase d'immobilisation (72) hors du laps de temps est choisie de façon à ce que cette accélération angulaire maximale soit globalement atteinte et/ou ne soit pas dépassée.

8. Procédé selon l'une des revendications précédentes, dans lequel une pluralité de cycles pas-à-pas (76) se succèdent directement, dans lequel les tracés de vitesse angulaire de chaque cycle pas-à-pas (76) sont identiques.

9. Unité de commande pour un entraînement rotatif d'une machine de formage à chaud (1) avec une pluralité de stations de traitement (20 - 23) disposées en cercle et une table rotative (12) disposée au-dessus, dans laquelle des tubes de verre (2) à traiter sont maintenus et peuvent être déplacés par un mouvement rotatif pas-à-pas d'une station de traitement (20 - 23) vers la suivante,
dans lequel la table rotative (12) est reliée, côté entraînement, avec un mécanisme pas-à-pas (42, 46) qui convertit un mouvement d'un arbre d'entraînement (52) en un mouvement pas-à-pas cyclique, dont le cycle pas-à-pas (76) comprend une phase de mouvement (72) puis une phase d'immobilisation (74),
**caractérisé en ce que** l'unité de commande est conçue pour contrôler l'arbre d'entraînement (52) du mécanisme pas-à-pas (42, 46) avec une vitesse angulaire variable de façon à ce que
la vitesse angulaire de l'arbre d'entraînement (52) adopte, à un premier moment de la phase de mouvement (72) d'un cycle pas-à-pas (76), une première valeur (78) et, à un deuxième moment de la phase d'immobilisation (74) du même cycle pas-à-pas (76), une deuxième valeur (80), différente de la première valeur (78).

10. Unité de commande selon la revendication 9, dans laquelle la première valeur (78) est supérieure à la deuxième valeur (80).

11. Unité de commande selon la revendication 9 ou 10, dans laquelle la vitesse angulaire est constante pendant la phase de mouvement (72).

12. Unité de commande selon l'une des revendications 9 à 11, dans laquelle la vitesse angulaire est constante pendant un laps de temps dans la phase d'immobilisation (74).

13. Unité de commande selon la revendication 12, dans laquelle le laps de temps comprend plus de 60 %, de préférence plus de 80 % de la phase d'immobilisation (74).

14. Unité de commande selon l'une des revendications 9 à 13, dans laquelle une pluralité de cycles pas-à-pas (76) se succèdent directement, dans lequel les tracés de vitesse angulaire de chaque cycle pas-à-pas (76) sont identiques.

15. Unité d'entraînement (58) pour une machine de formage à chaud (1) avec une pluralité de stations de traitement (20 - 23) disposées en cercle et une table rotative (12) disposée au-dessus, dans laquelle des tubes de verre (2) à traiter sont maintenus et peuvent être déplacés par un mouvement rotatif pas-à-pas d'une station de traitement (20 - 23) vers la suivante,
dans lequel la table rotative (12) est reliée, côté entraînement, avec un mécanisme pas-à-pas (42, 46) qui convertit un mouvement d'un arbre d'entraînement (52) en un mouvement pas-à-pas cyclique, dont le cycle pas-à-pas (76) comprend une phase de mouvement (72) puis une phase d'immobilisation (74),
comprenant un moteur d'entraînement (60) conçu pour l'entraînement de l'arbre d'entraînement (52) avec une vitesse angulaire variable pouvant être prédéterminée et une unité de commande selon l'une des revendications 9 à 14.

16. Unité d'entraînement (58) selon la revendication 15, dans lequel le moteur d'entraînement (60) est conçu comme un moteur synchrone (60).

17. Unité d'entraînement (58) selon la revendication 15 ou 16, dans laquelle le mécanisme pas-à-pas (42, 46) est conçu comme un mécanisme à came cylindrique.

18. Machine de formage à chaud (1) avec une pluralité de stations de traitement (20 - 23) disposées en cercle et une table rotative (12) disposée au-dessus, dans laquelle des tubes de verre (2) à traiter sont maintenus et peuvent être déplacés par un mouvement rotatif pas-à-pas d'une station de traitement (20 - 23) vers la suivante, et avec une unité d'entraînement (58) selon l'une des revendications 15 à 17.

19. Procédé d'équipement ultérieur d'une machine de formage à chaud (1) avec une pluralité de stations de traitement (20 - 23) disposées en cercle et une table rotative (12) disposée au-dessus, dans laquelle des tubes de verre (2) à traiter sont maintenus et peuvent être déplacés par un mouvement rotatif pas-à-pas d'une station de traitement (20 - 23) vers la suivante,
dans lequel la table rotative (12) est reliée, côté entraînement, avec un mécanisme pas-à-pas (42, 46) qui convertit un mouvement d'un arbre d'entraînement (52) en un mouvement pas-à-pas cyclique, dont le cycle pas-à-pas (76) comprend une phase de mouvement (72) puis une phase d'immobilisation (74),
dans lequel, dans la machine de formage à chaud (1) est montée ultérieurement une unité de commande selon l'une des revendications 9 à 14.

20. Procédé selon la revendication 19, dans lequel, dans la machine de formage à chaud (1), est monté ultérieurement un moteur d'entraînement (60) pour l'entraînement de l'arbre d'entraînement (52) avec une vitesse angulaire variable pouvant être prédéterminée.

21. Procédé selon la revendication 19 ou 20, dans lequel le moteur d'entraînement (60) est conçu comme un moteur synchrone (60).
